# EUROPÄISCHE PATENTSCHRIFT

(11) **EP 2 936 516 B1**
(45) Veröffentlichungstag und Bekanntmachung des Hinweises auf die Patenterteilung: **24.04.2019**
(21) Anmeldenummer: 13818723.2
(22) Anmeldetag: 18.12.2013
(51) Int. Cl.: H01F 27/36, H01F 38/14

(54) **INDUKTIVLADESPULENVORRICHTUNG**
INDUCTION CHARGING COIL DEVICE
ENSEMBLE BOBINE DE CHARGE INDUCTIVE

(30) Priorität: 21.12.2012 DE 102012112859; 21.12.2012 DE 102012112944; 17.12.2013 DE 102013226226
(43) Veröffentlichungstag der Anmeldung: 28.10.2015
(73) Patentinhaber: Robert Bosch GmbH, 70442 Stuttgart (DE)
(72) Erfinder: REJMAN, Marcin, 71332 Waiblingen (DE); LOHR, Guenter, 70771 Leinfelden-Echterdingen (DE); MACK, Juergen, 73035 Goeppingen (DE); KRUPEZEVIC, Dragan, 70565 Stuttgart (DE)
(86) Internationale Anmeldenummer: PCT/EP2013/077150
(87) Internationale Veröffentlichungsnummer: WO 2014/096040

(56) Entgegenhaltungen:
- EP-A2- 2 015 424
- WO-A1-2011/032803
- WO-A1-2012/147341
- US-A1- 2009 121 677
- US-A1- 2010 081 483
- US-A1- 2011 210 696
- US-A1- 2011 234 155

## Beschreibung

### Stand der Technik

Es sind bereits Induktivladespulenvorrichtungen, insbesondere Handwerkzeuginduktivladespulenvorrichtungen, mit wenigstens einer Spuleneinheit, mit wenigstens einer Abschirmeinheit, mit wenigstens einer Kerneinheit und mit wenigstens einer abzuschirmenden Elektronikeinheit und/oder Zelleneinheit bekannt. Ein Handwerkzeugakkupack mit einer Induktivladespulenvorrichtung ist aus WO2011/032803 A1 bekannt.

### Offenbarung der Erfindung

Die Erfindung wird in Anspruch 1 definiert. Die Erfindung geht aus von einem Handwekzeugakkupack miteiner Gehäuseeinheit und mit einer Induktivladespulenvorrichtung, insbesondere Handwerkzeuginduktivladespulenvorrichtung, mit wenigstens einer Spuleneinheit, mit wenigstens einer Abschirmeinheit, mit wenigstens einer Kerneinheit und mit wenigstens einer abzuschirmenden Elektronikeinheit und Zelleneinheit. Es wird vorgeschlagen, dass eine Projektionsfläche der Kerneinheit bei einer Projektion in Richtung einer Wicklungsachse der Spuleneinheit zumindest im Wesentlichen die abzuschirmende Elektronikeinheit und Zelleneinheit überdeckt. Unter einer "Spuleneinheit" soll in diesem Zusammenhang insbesondere eine Einheit verstanden werden, die zumindest eine Leiterschleife mit zumindest einer von einem Leiter gebildeten Wicklung aufweist. Die Spuleneinheit ist dazu vorgesehen, in zumindest einem Betriebszustand eine elektrische Energie zu senden und/oder vorzugsweise zu empfangen. Bevorzugt weist die Spuleneinheit einen Wicklungsträger auf. Der Wicklungsträger kann insbesondere dazu vorgesehen sein, die zumindest eine Leiterschleife zu stützen. Bevorzugt ist die Spuleneinheit dazu vorgesehen, empfangene Energie, insbesondere über einen Spannungswandler und/oder eine Ladeelektronik, einem Verbraucher und/oder einer Zelleneinheit eines Akkus zuzuführen. Alternativ kann die Induktivladespulenvorrichtung dazu vorgesehen sein, Energie an eine weitere Induktivladespulenvorrichtung zu senden. Vorzugsweise ist die Spuleneinheit dazu vorgesehen, einen elektrischen Wechselstrom in ein elektromagnetisches Wechselfeld umzuwandeln und/oder umgekehrt. Bevorzugt weist das Wechselfeld eine Frequenz von 10 - 500 kHz, besonders bevorzugt von 100 - 120 kHz, auf. Unter einer "Handwerkzeuginduktivladespulenvorrichtung" soll in diesem Zusammenhang insbesondere eine Induktivladespulenvorrichtung eines Handwerkzeugakkupacks verstanden werden. Unter einer "Handwerkzeugmaschine" soll in diesem Zusammenhang insbesondere ein durch einen Benutzer handgeführtes Elektrogerät, wie insbesondere eine Bohrmaschine, ein Bohrhammer, eine Säge, ein Hobel, ein Schrauber, eine Fräse, ein Schleifer, ein Winkelschleifer und/oder ein Multifunktionswerkzeug oder ein Gartengerät wie eine Hecken-, Strauch- und/oder Grasschere, verstanden werden. Unter einer "Abschirmeinheit" soll in diesem Zusammenhang insbesondere eine Vorrichtung verstanden werden, die dazu vorgesehen ist, eine Feldstärke des sich in Richtung von der Spuleneinheit zur abzuschirmenden Elektronikeinheit und/oder der Zelleneinheit ausbreitenden elektromagnetischen Wechselfelds im Bereich der abzuschirmenden Elektronikeinheit und/oder Zelleneinheit zu reduzieren. Bevorzugt wird die Feldstärke des elektromagnetischen Wechselfelds um wenigstens 50%, besonders bevorzugt um wenigstens 80%, reduziert. Unter einer "Kerneinheit" soll in diesem Zusammenhang insbesondere eine Vorrichtung verstanden werden, die dazu vorgesehen ist, ein elektromagnetisches Wechselfeld zu bündeln. Insbesondere kann die Kerneinheit zumindest teilweise von einem Magnetwerkstoff gebildet sein. Unter einem "Magnetwerkstoff" soll in diesem Zusammenhang vorzugsweise ein ferrimagnetischer, insbesondere weichmagnetischer, Werkstoff verstanden werden. Alternativ ist es auch denkbar, ferromagnetische und/oder antiferromagnetische Werkstoffe zu verwenden. Die Kerneinheit kann von einem keramischen Magnetwerkstoff gebildet sein. Die Kerneinheit kann ein Trägermaterial, insbesondere ein Bindemittel, aufweisen. Das Trägermaterial kann insbesondere dazu vorgesehen sein, den Magnetwerkstoff zu stützen. Unter einer "Elektronikeinheit" soll in diesem Zusammenhang insbesondere eine Vorrichtung verstanden werden, die zumindest ein elektrisches und/oder elektronisches Bauteil aufweist. Vorteilhaft kann die Elektronikeinheit eine Ladeelektronik des Handwerkzeugakkupacks aufweisen. Insbesondere kann die Elektronikeinheit eine Leiterplatte aufweisen. Unter einer "Leiterplatte" soll in diesem Zusammenhang insbesondere ein flächiges Bauteil verstanden werden, das dazu vorgesehen ist, elektrische und/oder elektronische Bauteile zu lagern und zu kontaktieren. Bevorzugt weist die Leiterplatte zumindest eine elektrisch isolierende Trägerschicht und zumindest eine an der Trägerschicht haftende Leiterschicht auf. Es ist auch möglich, dass an einer Seite der Trägerschicht mehrere Leiterschichten angeordnet sind, die durch Isolationsschichten getrennt sind. Unter einer "Zelleneinheit" soll in diesem Zusammenhang insbesondere eine Energiespeichereinheit verstanden werden, die zumindest eine Akkuzelle aufweist, die insbesondere zu einer elektrochemischen Speicherung elektrischer Energie vorgesehen ist. Die Akkuzelle kann eine Bleiakkuzelle, eine NiCd-Akkuzelle, eine NiMH-Akkuzelle, insbesondere jedoch eine lithiumbasierte Akkuzelle, sein. Es sind auch weitere, dem Fachmann bekannte Typen von Akkuzellen denkbar. Unter einer "Wicklungsachse" soll in diesem Zusammenhang insbesondere eine Achse verstanden werden, die im Mittel durch ein Zentrum der Wicklungen der Leiterschleifen der wenigstens einen Spuleneinheit der Induktivladespulenvorrichtung verläuft. Unter einer "Projektionsfläche" soll in diesem Zusammenhang insbesondere eine Fläche eines Schattenwurfs eines Körpers bei einer Parallelprojektion in Projektionsrichtung verstanden werden. Unter "zumindest im Wesentlichen überdecken" soll in diesem Zusammenhang insbesondere verstanden werden, dass die Projektionsfläche der Kerneinheit in Projektionsrichtung eine Außenkontur der Elektronikeinheit und der Zelleneinheit, zu wenigstens 90%, bevorzugt zu mehr als 95%, besonders bevorzugt zu wenigstens 100%, überdeckt. Die Kerneinheit kann das elektromagnetische Wechselfeld vorteilhaft so bündeln, dass im Bereich der Elektronikeinheit und/oder der Zelleneinheit nur reduzierte Feldstärken auftreten.

Vorteilhaft kann die Abschirmeinheit zumindest teilweise von der Kerneinheit gebildet werden. Vorteilhaft kann ein sich in Richtung von der Spuleneinheit zur Elektronikeinheit und der Zelleneinheit bei einem Betrieb der Induktivladespulenvorrichtung ausbreitendes elektromagnetisches Wechselfeld von der Kerneinheit in Richtung der Spuleneinheit gebündelt werden. Eine im elektromagnetischen Wechselfeld enthaltene Energie kann von der Spuleneinheit zumindest teilweise aufgenommen werden und einen elektrischen Strom verstärken. Eine Feldstärke des elektromagnetischen Wechselfelds kann auf einer der Elektronikeinheit und Zelleneinheit zugewandten Seite der Kerneinheit um wenigstens 50%, besonders bevorzugt um wenigstens 80%, reduziert sein. Die abzuschirmende Elektronikeinheit und Zelleneinheit kann vor dem elektromagnetischen Wechselfeld geschützt werden. Ein Einfluss des elektromagnetischen Wechselfelds auf die Elektronikeinheit und Zelleneinheit kann reduziert werden. Verlustströme, die in der Elektronikeinheit und Zelleneinheit durch das elektromagnetische Wechselfeld hervorgerufen werden, können reduziert sein. Eine Erwärmung der Elektronikeinheit und Zelleneinheit durch Verlustströme kann reduziert sein. Eine Beschädigung der Elektronikeinheit und Zelleneinheit und/oder eine reduzierte Lebensdauer der Elektronikeinheit und Zelleneinheit und/oder eine Fehlfunktion der Elektronikeinheit und Zelleneinheit durch Einflüsse des elektromagnetischen Wechselfelds auf die Elektronikeinheit und Zelleneinheit kann vermieden werden. Ein Wirkungsgrad der Induktivladespulenvorrichtung kann erhöht sein.

Weiter wird vorgeschlagen, dass die Projektionsfläche der Kerneinheit zumindest im Wesentlichen ausnehmungsfrei ist. Unter "zumindest im Wesentlichen" soll in diesem Zusammenhang verstanden werden, dass eine Gesamtfläche von Ausnehmungen der Projektionsfläche weniger als 10%, bevorzugt weniger als 5%, besonders bevorzugt weniger als 1%, einer Gesamtfläche der Projektionsfläche beträgt. Vorteilhaft kann die Kerneinheit die Leiterschleifen der Spuleneinheit zumindest im Wesentlichen ausnehmungsfrei überdecken. Besonders bevorzugt überdeckt die Kerneinheit zumindest die Leiterschleifen der Spuleneinheit ausnehmungsfrei. Die Kerneinheit kann das elektromagnetische Wechselfeld besonders wirksam abschirmen.

Weiter wird vorgeschlagen, dass die Abschirmeinheit zumindest teilweise von zumindest einer elektrisch leitenden Materialschicht gebildet wird. Die elektrisch leitende Materialschicht kann das elektromagnetische Feld insbesondere abschirmen, indem sie dieses reflektiert und zurückwirft. Die abzuschirmende Elektronikeinheit und/oder Zelleneinheit kann vor dem elektromagnetischen Feld geschützt werden. Ein Einfluss des elektromagnetischen Felds auf die Elektronikeinheit und/oder Zelleneinheit kann reduziert werden. Verlustströme, die in der Elektronikeinheit und/oder Zelleneinheit durch das elektromagnetische Wechselfeld hervorgerufen werden, können reduziert sein. Eine Erwärmung der Elektronikeinheit und/oder Zelleneinheit durch Verlustströme kann reduziert sein. Eine Beschädigung der Elektronikeinheit und/oder Zelleneinheit und/oder eine reduzierte Lebensdauer der Elektronikeinheit und/oder Zelleneinheit und/oder eine Fehlfunktion der Elektronikeinheit und/oder Zelleneinheit durch Einflüsse des elektromagnetischen Wechselfelds auf die Elektronikeinheit und/oder Zelleneinheit kann vermieden werden. Ein Wirkungsgrad der Induktivladespulenvorrichtung kann erhöht sein. Die elektrisch leitende Materialschicht kann insbesondere von einem Kupfer- und/oder Aluminiummaterial gebildet werden. Unter einem "Kupfer- und/oder Aluminiummaterial" soll in diesem Zusammenhang insbesondere ein Material verstanden werden, das zumindest überwiegend aus Kupfer und/oder Aluminium besteht. Ein Kupfer- und/oder Aluminiummaterial kann eine besonders effiziente leitende Materialschicht bilden. Insbesondere kann das Kupfer- und/oder Aluminiummaterial in einem Beschichtungsverfahren auf eine Trägerschicht aufgebracht sein, bevorzugt in einem galvanischen Verfahren. Die Materialschicht kann besonders dauerhaft mit der Trägerschicht verbunden sein. Die Materialschicht kann besonders dünn sein. Insbesondere kann die Materialschicht dünner als 0,5 mm, bevorzugt dünner als 0,1 mm, sein. Die Materialschicht kann besonders leicht und/oder kostengünstig sein. Vorteilhaft kann die Materialschicht von einer Leiterschicht einer Leiterplatte gebildet werden. In einer alternativen Ausgestaltung der Erfindung kann die Materialschicht von einer aufgedruckten und/oder auflackierten Schicht gebildet werden. Insbesondere kann die Materialschicht von einem elektrisch leitenden Lack gebildet werden. Der elektrisch leitende Lack kann insbesondere elektrisch leitende Partikel enthalten, wie Graphitpartikel oder Metallpartikel. Die Materialschicht kann besonders einfach auf die Trägerschicht aufgebracht werden. Die Abschirmeinheit kann die elektrisch leitende Materialschicht und die Kerneinheit umfassen. Die Abschirmung kann besonders wirksam sein.

Weiter wird vorgeschlagen, dass die zumindest eine elektrisch leitende Materialschicht eine Projektionsfläche aufweist, die bei einer Projektion in Richtung einer Wicklungsachse der Spuleneinheit zumindest im Wesentlichen die abzuschirmende Elektronikeinheit und/oder Zelleneinheit überdeckt. Die elektrisch leitende Materialschicht kann die abzuschirmende Elektronikeinheit und/oder Zelleneinheit besonders wirksam gegenüber dem elektromagnetischen Wechselfeld abschirmen.

Alternativ und/oder zusätzlich wird eine elektrisch leitende Materialschicht vorgeschlagen, die eine Projektionsfläche aufweist, die bei einer Projektion in Richtung der Wicklungsachse der Spuleneinheit zumindest im Wesentlichen innerhalb einer Projektionsfläche der Kerneinheit liegt. Insbesondere kann ein bezogen auf die Wicklungsachse äußerer Rand der Projektionsfläche der elektrisch leitenden Materialschicht von der Wicklungsachse einen um 1 - 10mm, bevorzugt 2 - 5mm, besonders bevorzugt 2,5 - 3,5mm geringeren Abstand aufweisen als ein bezogen auf die Wicklungsachse innerer Rand der Projektionsfläche der Kerneinheit. Die elektrisch leitende Materialschicht kann das elektromagnetische Wechselfeld in einem Raum innerhalb der Wicklungen der Spuleneinheit wirksam abschirmen. Im Bereich einer Außenkante der Kerneinheit kann eine Feldstärke des elektromagnetischen Wechselfelds besonders hoch sein. Die elektrisch leitende Materialschicht kann außerhalb dieses Bereichs mit besonders hoher Feldstärke angeordnet sein. Ein durch das elektromagnetische Wechselfeld in der elektrisch leitenden Materialschicht induziertes elektrisches Potential kann reduziert sein und trotzdem eine große Güte erreicht werden. Ein Einfluss des elektromagnetischen Wechselfelds auf Bauteile, die mit der elektrisch leitenden Materialschicht leitend verbunden sind, kann gering sein.

Weiter wird vorgeschlagen, dass die Abschirmeinheit in einer Projektionsfläche in Richtung einer Wicklungsachse der Spuleneinheit eine Mehrzahl elektrisch leitender, durch Isolatoren voneinander getrennter Materialschichten aufweist. Insbesondere können die Materialschichten innerhalb der Projektionsfläche der Wicklungen angeordnet sein. Unter einem "Isolator" soll in diesem Zusammengang insbesondere ein elektrisch isolierendes Material und/oder ein Abstand verstanden werden. Die Materialschichten können unterschiedliche elektrische Potentiale aufweisen. Bevorzugt können Bauteile mit den Materialschichten elektrisch leitend verbunden sein. Insbesondere können Bauteile, die mit einer der Materialschichten verbunden sind, im Bereich der Verbindung ein gemeinsames elektrisches Potential aufweisen. Es kann vermieden werden, dass unterschiedliche elektrische Potentiale der Bauteile durch eine Verbindung mit einer gemeinsamen elektrisch leitenden Materialschicht ausgeglichen werden.

Weiter wird vorgeschlagen, dass zumindest eine elektrisch leitende Materialschicht an einer Rückseite der Elektronikeinheit angeordnet ist. Unter einer "Rückseite" soll in diesem Zusammenhang insbesondere eine einer Bestückungsseite abgewandte Seite der Elektronikeinheit verstanden werden. Unter einer "Bestückungsseite" soll in diesem Zusammenhang insbesondere eine Seite der Elektronikeinheit verstanden werden, an der zumindest eine Mehrzahl der elektronischen und/oder elektrischen Komponenten der Elektronikeinheit angeordnet ist. Insbesondere kann die zumindest eine elektrisch leitende Materialschicht von einer der Spuleneinheit zugewandten Leiterschicht der Leiterplatte der Elektronikeinheit gebildet werden. Bevorzugt kann die zumindest eine elektrisch leitende Materialschicht in Richtung der Wicklungsachse eine Projektionsfläche aufweisen, die innerhalb der Projektionsfläche der Wicklungen der Spuleneinheit liegt. Bevorzugt kann die Leiterplatte innerhalb der Projektionsfläche der Wicklungen mehrere durch Isolatoren getrennte Materialschichten aufweisen. Die Materialschichten können unterschiedliche elektrische Potentiale aufweisen. Bevorzugt können die Materialschichten jeweils mit einem oder mehreren Bauteilen, insbesondere elektrischen und/oder elektronischen Bauteilen, der Elektronikeinheit verbunden sein, insbesondere mittels durch die Leiterplatte geführter Anschlussdrähte. Bevorzugt können die Anschlussdrähte mit den Materialschichten verlötet sein. Bevorzugt weisen die Verbindungen von Bauteilen mit einer Materialschicht das gleiche elektrische Potential auf. Bevorzugt werden die Verbindungen zumindest überwiegend von einem Material mit guter Wärmeleitfähigkeit gebildet, insbesondere einem Metall. In den elektrischen und/oder elektronischen Bauteilen beim Betrieb der Induktivladespulenvorrichtung erzeugte Wärme kann an die Materialschicht abgegeben und/oder von der Materialschicht abgestrahlt werden. Die Materialschicht kann einen Kühlkörper der mit der Materialschicht verbundenen Bauteile bilden. Bauteile mit unterschiedlichem elektrischem Material können mit unterschiedlichen, durch Isolatoren getrennten Materialschichten verbunden sein. Es kann vermieden werden, dass die unterschiedlichen Potentiale der Bauteile ausgeglichen werden.

Weiter wird vorgeschlagen, dass die Projektionsfläche der Kerneinheit und/oder zumindest einer elektrisch leitenden Materialschicht bei einer Projektion in Richtung der Wicklungsachse zumindest im Wesentlichen einer Projektionsfläche der abzuschirmenden Elektronikeinheit und/oder Zelleneinheit bei der Projektion in Richtung der Wicklungsachse entspricht. Unter "zumindest im Wesentlichen" soll in diesem Zusammenhang insbesondere eine Abweichung von weniger als 20%, bevorzugt weniger als 10%, besonders bevorzugt weniger als 5%, verstanden werden. Die Kerneinheit und/oder zumindest eine elektrisch leitende Materialschicht kann besonders kompakt sein. Es kann vermieden werden, dass die Kerneinheit und/oder die elektrisch leitende Materialschicht senkrecht zur Wicklungsachse über die Elektronikeinheit und/oder Zelleneinheit hinausragt. Die Projektionsfläche der Kerneinheit kann besonders gut mit der Elektronikeinheit und/oder Zelleneinheit abgestimmt sein.

Weiter wird vorgeschlagen, dass die Kerneinheit und/oder zumindest eine elektrisch leitende Materialschicht zumindest teilweise topfförmig ausgebildet ist. Unter "topfförmig" soll in diesem Zusammenhang insbesondere eine Form mit einer Vertiefung verstanden werden, wobei sich die Vertiefung bevorzugt um die Wicklungsachse der Spuleneinheit in Richtung der Spuleneinheit erstreckt. Die Kerneinheit und/oder zumindest eine elektrisch leitende Materialschicht kann die auf der der Spuleneinheit abgewandten Seite der Kerneinheit angeordnete Elektronikeinheit und/oder Zelleneinheit besonders gut vor dem im Betrieb der Induktivladespulenvorrichtung auf die Kerneinheit eintreffenden magnetischen Wechselfeld abschirmen.

Besonders bevorzugt umgibt die Kerneinheit und/oder zumindest eine elektrisch leitende Materialschicht die abzuschirmende Elektronikeinheit und/oder Zelleneinheit zumindest teilweise. Bevorzugt sind zumindest 30%, besonders bevorzugt zumindest 50%, der Elektronikeinheit und/oder Zelleneinheit, bevorzugt der Elektronikeinheit und Zelleneinheit, in dem topfförmig ausgebildeten Bereich der Kerneinheit angeordnet. Die Abschirmung der Elektronikeinheit und/oder Zelleneinheit vor dem im Betrieb der Induktivladespulenvorrichtung auf die Kerneinheit und/oder auf zumindest eine elektrisch leitende Materialschicht treffenden magnetischen Wechselfeld kann weiter verbessert sein.

Weiter wird vorgeschlagen, dass die Kerneinheit zumindest teilweise von in einem Bindemittel eingebetteten Kernelementen gebildet ist. Unter einem "Kernelement" sollen in diesem Zusammenhang insbesondere Bestandteile der Kerneinheit verstanden werden, die zumindest im Wesentlichen verantwortlich für die magnetischen Eigenschaften der Kerneinheit sind. Die Kernelemente sind bevorzugt zumindest überwiegend von dem Magnetwerkstoff, insbesondere einem gesinterten Ferritmaterial, gebildet. Vorteilhaft sind die Kernelemente zu mindestens 70%, bevorzugt zu mindestens 80%, besonders bevorzugt zu mindestens 90%, von einem Mangan-Zink (MnZn)- und/oder Nickel-Zink (NiZn)-Sinterwerkstoff gebildet. Bevorzugt können die Kernelemente in einem als Gießharz ausgebildeten Bindemittel vergossen sein, insbesondere einem Epoxidharz. Die Kerneinheit kann vorteilhaft in einem Gießverfahren hergestellt werden. Alternativ kann das Bindemittel linear polymerisierende Monomerbausteine und/oder Oligomerbausteine eines Thermoplasts wie Lactame und/oder cyclische Butylenterephthalat- Oligomere enthalten. Das Bindemittel kann die Kernelemente umgeben und zu einem Polymer polymerisieren, wie insbesondere einem Polyamid. Dieser Vorgang kann schneller erfolgen als ein Aushärten eines Epoxidharzes. Eine Herstellung und/oder Aushärtung der Kerneinheit kann in einer besonders kurzen Zeitspanne erfolgen. Die Kerneinheit kann besonders robust sein. Das Bindemittel kann mit den Kernelementen eine besonders bruchfeste Einheit bilden, insbesondere kann eine Bruchfestigkeit höher sein als bei einer Kerneinheit, die von einem Sinterbauteil gebildet ist. Alternativ können die Kernelemente mit einem als Lack ausgebildeten Bindemittel überlackiert, das heißt überzogen, sein. Die Kernelemente können miteinander verkleben. Es kann besonders wenig Bindemittel benötigt werden. Zwischen den Kernelementen können Hohlräume zumindest teilweise frei bleiben. Die Kerneinheit kann eine besonders geringe Masse aufweisen. Die Kerneinheit kann besonders kostengünstig sein.

Alternativ wird vorgeschlagen, dass die Kerneinheit aus einem keramischen, insbesondere ferromagnetischen, Werkstoff besteht, wodurch vorteilhaft ein besonders hoher Wirkungsgrad bei einer Energieübertragung erreicht werden kann. Insbesondere können Verluste durch Wirbelströme minimiert werden. Insbesondere soll unter einem "keramischen" Werkstoff ein anorganischer polykristalliner Werkstoff verstanden werden, der durch einen Sintervorgang hergestellt wurde. Dabei weist die Kerneinheit vorzugsweise zumindest zwei relativ zueinander bewegbare Kernelemente auf, wie z. B. in DE 10 2011 083 003 A1 beschrieben. Vorzugsweise sind die Kernelemente bei einer Verformung eines Gehäuses relativ zueinander zerstörungsfrei bewegbar. Insbesondere soll unter der Wendung "relativ zueinander bewegbar" verstanden werden, dass eine Stelle des einen Kernelements relativ zu einer Stelle des anderen Kernelements um eine Strecke zerstörungsfrei verschiebbar ist, die bei einer einstückigen Kerneinheit diese zerstört. Vorzugsweise sind die Kernelemente um mehr als 0,1 mm, vorteilhaft um mehr als 0,4 mm, besonders vorteilhaft um mehr als 1 mm, relativ zueinander bewegbar. Unter einem "Kernelement" soll insbesondere ein einstückiger Bereich der Kerneinheit verstanden werden, der vorteilhaft aus einem homogenen Werkstoff besteht. Vorzugsweise weist die Kerneinheit wenigstens drei, besonders bevorzugt wenigstens vier Kernelemente auf. Ein Kernelement kann von einem Sinterbauteil gebildet sein. Insbesondere weist die Kerneinheit zumindest ein Trennelement auf, das dazu vorgesehen ist, die Kernsegmente voneinander beabstandet anzuordnen, wodurch eine wirkungsvolle und trotzdem gegen Zerstörung gut geschützte Kerneinheit möglich ist. Unter einem "Trennelement" soll insbesondere ein Element verstanden werden, das in zumindest einem Betriebszustand auf zumindest eines der Kernelemente eine Kraft bewirkt, die einem Annähern der Kernelemente aneinander entgegenwirkt. Vorzugsweise ist das Trennelement zwischen den zumindest zwei Kernelementen angeordnet. Das heißt insbesondere, dass das Trennelement auf einer Geraden angeordnet ist, die zumindest zwei verschiedene, benachbarte Kernelemente schneidet. Vorzugsweise weist das Trennelement eine Klebeschicht, ein aufgeschäumtes Material und/oder ein anderes, dem Fachmann als sinnvoll erscheinendes Material auf. Besonders bevorzugt ist das Trennelement als eine Kunststoffschicht ausgebildet.

In einer besonders vorteilhaften Ausgestaltung der Erfindung wird vorgeschlagen, dass die Kerneinheit Bereiche mit einer differierenden Kernmaterialzusammensetzung aufweist. Unter einer "Kernmaterialzusammensetzung" soll in diesem Zusammenhang insbesondere eine chemische und/oder physikalische Zusammensetzung einen Bereich der Kerneinheit bildender Kernmaterialien verstanden werden. Insbesondere kann die Kernmaterialzusammensetzung durch ein Verhältnis von Kernelementen und Bindemittel bestimmt sein. Die Kernmaterialzusammensetzung kann besonders gut an verschiedene Anforderungen innerhalb der Kerneinheit abgestimmt werden. Insbesondere kann die Kernmaterialzusammensetzung in Bereichen, die bei einem Betrieb der Spuleneinheit eine hohe Feldstärke aufweisen, besonders gut geeignet sein, ein magnetisches Feld zu bündeln. Bevorzugt kann die Kernmaterialzusammensetzung in Bereichen mit einer hohen mechanischen Belastung, wie im Bereich von Lagermitteln, die dazu vorgesehen sind, die Kerneinheit zu lagern, besonders bruchfest sein. Bevorzugt kann die Kerneinheit in Bereichen ohne spezielle Anforderungen besonders kostengünstig sein. Der Fachmann kann die Kernmaterialzusammensetzung insbesondere im Hinblick auf funktionelle sowie Materialkosten optimal wählen.Vorteilhaft kann die Kernmaterialzusammensetzung so gewählt sein, dass eine Permeabilitätszahl µ der Kerneinheit zumindest in den Leiterschleifen der Spuleneinheit zugewandten Teilbereichen der Kerneinheit größer als 200 ist. In Teilbereichen der Spuleneinheit die den Leiterschleifen der Spuleneinheit abgewandt sind und/oder die am weitesten von den Leiterschleifen entfernt sind, kann die Permeabilitätszahl µ kleiner als 20 sein. Die Kerneinheit kann besonders effizient und/oder haltbar und/oder kostengünstig sein. Eine zur Herstellung der Kerneinheit notwendige Menge Magnetwerkstoff kann reduziert werden.

Weiter wird eine Kontaktierungseinheit vorgeschlagen, die durch eine Ausnehmung der Kerneinheit und/oder der Elektronikeinheit geführt ist. Unter einer "Kontaktierungseinheit" soll in diesem Zusammenhang bevorzugt eine Vorrichtung verstanden werden, die zu einer lösbaren Kontaktierung der Spuleneinheit vorgesehen ist. Insbesondere kann die Kontaktierungseinheit als Steckverbindung mit zwei Steckverbindungselementen ausgebildet sein. Die Steckverbindung kann bevorzugt einen Stecker und eine Kupplung aufweisen. Es sind aber auch alternative Ausbildungen der Kontaktierungseinheit denkbar, insbesondere Zuleitungen, die mittels einer Lötverbindung einen Kontakt herstellen. Bevorzugt kann eines der Steckverbindungselemente, bevorzugt der Stecker, fest mit der Spuleneinheit verbunden sein. Bevorzugt kann das Steckverbindungselement mit der Spuleneinheit verlötet sein. Bevorzugt kann das weitere Steckverbindungselement mit der Elektronikeinheit verbunden sein, bevorzugt verlötet. Bevorzugt kann das weitere Steckverbindungselement als Kupplung ausgebildet sein. Bevorzugt können in einem montierten Zustand der Induktivladespulenvorrichtung, in dem die Kontaktierungseinheit die Spuleneinheit mit der Elektronikeinheit kontaktiert, die Steckverbindungselemente zumindest zu einem Großteil innerhalb der Ausnehmungen der Kerneinheit und/oder der Elektronikeinheit angeordnet sein. Unter "zu einem Großteil" sollen in diesem Zusammenhang mehr als 50%, bevorzugt mehr als 60%, besonders bevorzugt mehr als 80%, eines äußeren Volumens der Steckverbindung verstanden werden. Die Induktivladespulenvorrichtung kann besonders kompakt sein. Insbesondere kann die Induktivladespulenvorrichtung in einer Dickenrichtung in Richtung einer Wicklungsachse besonders dünn sein. Eine besonders platzsparende Unterbringung der Induktivladespulenvorrichtung ist möglich. Eine die Induktivladespulenvorrichtung aufweisende Vorrichtung kann besonders kompakt sein. Eine Montage der Induktivladespulenvorrichtung kann besonders einfach sein. Insbesondere kann die Kontaktierungseinheit bei einem Zusammenfügen der Spuleneinheit mit der Kerneinheit und der Elektronikeinheit in einer Montagebewegung die Kontaktierung der Spuleneinheit mit der Elektronikeinheit bilden.

Weiter wird eine Gehäuseeinheit vorgeschlagen, in die die Kerneinheit eingegossen und/oder an die die Kerneinheit angespritzt ist. Insbesondere kann die Gehäuseeinheit die Induktivladespulenvorrichtung beinhalten. Die Kerneinheit kann besonders wirksam mit der Gehäuseeinheit verbunden sein. Die Kerneinheit kann durch die Gehäuseeinheit besonders gut geschützt sein. Ein Bruch der Kerneinheit kann vermieden werden. Besonders vorteilhaft kann die Spuleneinheit in der Kerneinheit eingegossen sein. Kerneinheit, Spuleneinheit und Gehäuseeinheit können eine besonders robuste Baugruppe bilden. Die Induktivladespulenvorrichtung kann besonders langlebig sein.

Weiter wird eine Handwerkzeugvorrichtung mit einer Induktivladespulenvorrichtung mit den beschriebenen Merkmalen vorgeschlagen. Hierbei kann die Handwerkzeugvorrichtung von einer Handwerkzeugmaschine, einem Handwerkzeugakkupack, einem Handwerkzeugkoffer oder von einer Handwerkzeugakkuladevorrichtung gebildet sein. Die Handwerkzeugvorrichtung kann die genannten Vorteile der Induktivladespulenvorrichtung aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Schnittdarstellung durch einen Handwerkzeugakkupack mit einer Induktivladespulenvorrichtung und einer Handwerkzeugakkuladevorrichtung mit einer weiteren Induktivladespulenvorrichtung,
- Fig. 2: eine schematische Schnittdarstellung der Induktivladespulenvorrichtung mit einer Kontaktierungseinheit,
- Fig. 3: eine schematische Schnittdarstellung durch einen Handwerkzeugakkupack mit einer Induktivladespulenvorrichtung in einem zweiten Ausführungsbeispiel,
- Fig. 4: eine schematische Schnittdarstellung durch eine Kerneinheit und eine Spuleneinheit einer Induktivladespulenvorrichtung in einem dritten Ausführungsbeispiel,
- Fig. 5: eine schematische Darstellung eines Teils einer Gehäuseeinheit mit einer Induktivladespulenvorrichtung in einem vierten Ausführungsbeispiel,
- Fig. 6: eine schematische Schnittdarstellung durch einen Handwerkzeugakkupack und eine Handwerkzeugakkuladevorrichtung mit Induktivladespulenvorrichtungen in einem fünften Ausführungsbeispiel,
- Fig. 7: eine schematische Darstellung einer die Spuleneinheit der Induktivladespulenvorrichtung bildenden Leiterplatte,
- Fig. 8: eine schematische Schnittdarstellung durch einen Handwerkzeugakkupack und eine Handwerkzeugakkuladevorrichtung mit Induktivladespulenvorrichtungen in einem sechsten Ausführungsbeispiel,
- Fig. 9: eine schematische Schnittdarstellung durch eine Spuleneinheit einer Induktivladespulenvorrichtung in einem siebten Ausführungsbeispiel.
- Fig. 10: eine schematische Darstellung einer Spuleneinheit mit einer Abschirmeinheit in einem achten Ausführungsbeispiel und
- Fig. 11: eine schematische Darstellung einer Spuleneinheit mit einer Abschirmeinheit in einem neunten Ausführungsbeispiel.

### Beschreibung der Ausführungsbeispiele

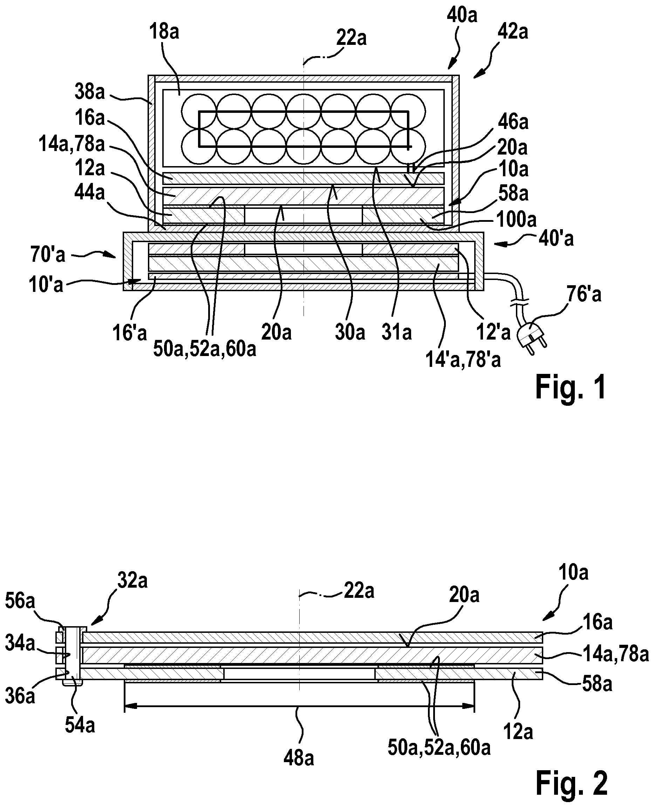

Figur 1 zeigt eine Handwerkzeugvorrichtung 40a mit einer Induktivladespulenvorrichtung 10a. Die Handwerkzeugvorrichtung 40a ist als ein Handwerkzeugakkupack 42a ausgebildet. In einer Gehäuseeinheit 38a ist eine Zelleneinheit 18a angeordnet, die dazu vorgesehen ist, eine Handwerkzeugmaschine mit Energie zu versorgen. Die Induktivladespulenvorrichtung 10a ist zu einer drahtlosen Energieübertragung für einen Ladevorgang der Zelleneinheit 18a vorgesehen. Die Induktivladespulenvorrichtung 10a ist zwischen der Zelleneinheit 18a und einer Gehäusewand 44a der Gehäuseeinheit 38a angeordnet. Ausgehend von der Gehäusewand 44a in Richtung der Zelleneinheit 18a folgen zunächst eine Spuleneinheit 12a, eine Kerneinheit 14a und eine Elektronikeinheit 16a. Die Kerneinheit 14a wird von einem keramischen Werkstoff gebildet. Alternativ kann die Kerneinheit 14a in einem Bindemittel eingebettete Kernelemente oder zueinander bewegbar gelagerte Kernelemente aufweisen. Die Elektronikeinheit 16a ist mit einem Verbindungsleiter 46a mit der Zelleneinheit 18a verbunden und weist eine Ladeelektronik auf. Die Induktivladespulenvorrichtung 10a mit der Spuleneinheit 12a, der Kerneinheit 14a und der Elektronikeinheit 16a weist eine quadratische Grundfläche auf. Eine quadratische Leiterplatte 58a mit beidseitigen Leiterschichten 60a bildet die Spuleneinheit 12a. Die Spuleneinheit 12a weist zwei Leiterschleifen 50a mit spiralförmigen Wicklungen 52a mit identischem Wicklungssinn um eine Wicklungsachse 22a auf. Die Leiterschleifen 50a werden von beidseitig einer Trägerschicht 100a der Leiterplatte 58a angeordneten Leiterbahnen der Leiterschichten 60a gebildet. Die Trägerschicht 100a bildet so einen Wicklungsträger der Leiterschleifen 50a. Figur 2 zeigt eine Schnittdarstellung durch die Induktivladespulenvorrichtung 10a in der Diagonale der quadratischen Leiterplatte 58a. Eine in einer Ecke der Induktivladespulenvorrichtung 10a angeordnete, im Schnitt der Figur 2 dargestellte Kontaktierungseinheit 32a ist dazu vorgesehen, die Spuleneinheit 12a mit der Elektronikeinheit 16a zu kontaktieren, und weist einen mit der Spuleneinheit 12a verlöteten Steckverbinder 54a und eine mit der Elektronikeinheit 16a verlötete Kupplung 56a auf. Die Kontaktierungseinheit 32a ist durch eine Ausnehmung 34a der Elektronikeinheit 16a und durch eine Ausnehmung 36a der Kerneinheit 14a geführt.

Die Kerneinheit 14a bildet eine Abschirmeinheit 78a und schirmt die Elektronikeinheit 16a und die Zelleneinheit 18a vor Einflüssen eines elektromagnetischen Wechselfelds aus dem Bereich der Spuleneinheit 12a weitgehend ab, indem sie die Magnetfeldlinien in Richtung der Spuleneinheit 12a bündelt. Die Kerneinheit 14a weist bei einer Projektion in Richtung der Wicklungsachse 22a der Spuleneinheit 12a eine Projektionsfläche 20a auf, die die Elektronikeinheit 16a und die Zelleneinheit 18a überdeckt und die im Wesentlichen einer Projektionsfläche 30a der Elektronikeinheit 16a und einer Projektionsfläche 31a der Zelleneinheit 18a bei einer Projektion in Richtung der Wicklungsachse 22a entspricht. Die Projektionsfläche 20a ist im Wesentlichen ausnehmungsfrei. Die Ausnehmung 36a zur Durchführung der Kontaktierungseinheit 32a weist eine Fläche aus, die weniger als 5% der Projektionsfläche 20a entspricht, und ist außerhalb eines Durchmessers 48a der die Wicklungen 52a aufweisenden Leiterschleifen 50a der Spuleneinheit 12a angeordnet, so dass die Kerneinheit 14a die Leiterschleifen 50a in Richtung der Elektronikeinheit 16a und der Zelleneinheit 18a ausnehmungsfrei überdeckt.

Wird die Induktivladespulenvorrichtung 10a dem Einfluss eines elektromagnetischen Wechselfelds ausgesetzt, wird in der Leiterschleife 50a der Spuleneinheit 12a ein Strom induziert, der zum Laden der Zelleneinheit 18a genutzt werden kann. Zur Erzeugung des elektromagnetischen Wechselfelds ist eine zweite, analog aufgebaute Induktivladespulenvorrichtung 10'a vorgesehen, die in einer weiteren als Handwerkzeugakkuladevorrichtung 70'a ausgebildeten Handwerkzeugvorrichtung 40'a angeordnet ist. Die Induktivladespulenvorrichtung 10'a weist eine Elektronikeinheit 16'a auf, die aus einem über eine Stromversorgung 76'a zugeführten Strom einen Wechselstrom mit einer Frequenz von 100 kHz erzeugt und einer Spuleneinheit 12'a zuführt, so dass das elektromagnetische Wechselfeld erzeugt und von einer Kerneinheit 14'a gebündelt wird. Wird der Handwerkzeugakkupack 42a auf die Handwerkzeugakkuladevorrichtung 70'a aufgesetzt, so gerät die Induktivladespulenvorrichtung 10a in den Einfluss des elektromagnetischen Wechselfelds der Induktivladespulenvorrichtung 10'a, so dass eine Energieübertragung stattfindet.

Die nachfolgenden Beschreibungen und die Zeichnung weiterer Ausführungsbeispiele beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele verwiesen werden kann. Zur Unterscheidung der Ausführungsbeispiele sind anstelle des Buchstabens a des ersten Ausführungsbeispiels die Buchstaben b - i den Bezugszeichen der weiteren Ausführungsbeispiele nachgestellt.

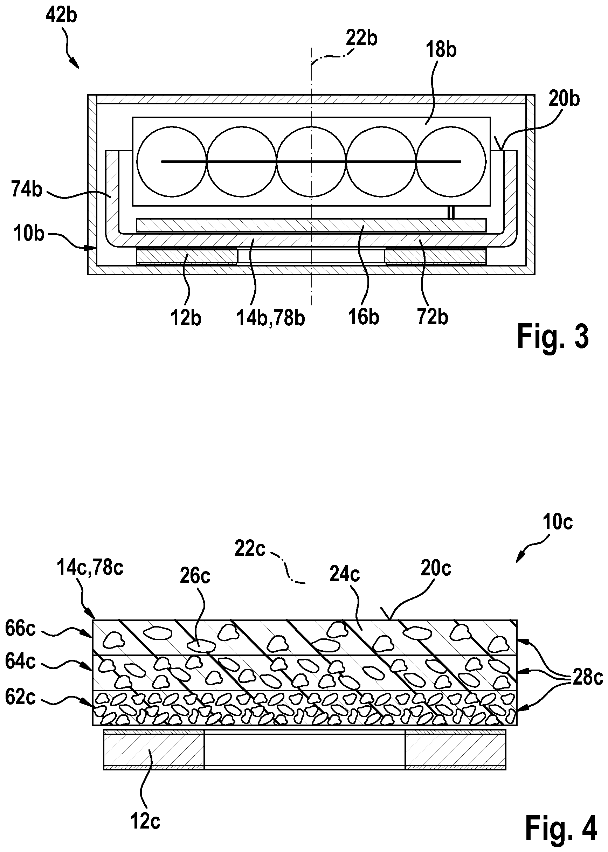

Figur 3 zeigt einen Handwerkzeugakkupack 42b mit einer Induktivladespulenvorrichtung 10b in einem zweiten Ausführungsbeispiel. Die Induktivladespulenvorrichtung 10b unterscheidet sich von der Induktivladespulenvorrichtung 10a des ersten Ausführungsbeispiels insbesondere dadurch, dass eine eine Abschirmeinheit 78b bildende Kerneinheit 14b topfförmig ausgebildet ist und eine abzuschirmende Elektronikeinheit 16b und Zelleneinheit 18b teilweise umgibt. Die Kerneinheit 14b weist eine ebene Grundfläche 72b auf, die an eine Spuleneinheit 12b angrenzt und die bei einer Projektion in Richtung einer Wicklungsachse 22b der Spuleneinheit 12b die Zelleneinheit 18b und die Elektronikeinheit 16b vollständig überdeckt. Ein sich an die Grundfläche 72b anschließender, in Richtung der Elektronikeinheit 16b erstreckender Wandbereich 74b umschließt die Elektronikeinheit 16b und Teile der Zelleneinheit 18b um die Wicklungsachse 22b. Die topfförmige Kerneinheit 14b kann die Elektronikeinheit 16b und die Zelleneinheit 18b besonders gut vor Einflüssen eines elektromagnetischen Wechselfelds aus dem Bereich der Spuleneinheit 12b abschirmen, indem sie Magnetfeldlinien bündelt und in Richtung der Spuleneinheit 12b lenkt.

Figur 4 zeigt eine Spuleneinheit 12c und eine Kerneinheit 14c einer Induktivladespulenvorrichtung 10c in einem dritten Ausführungsbeispiel. Die Induktivladespulenvorrichtung 10c unterscheidet sich von der Induktivladespulenvorrichtung 10a des ersten Ausführungsbeispiels insbesondere dadurch, dass die Kerneinheit 14c von in einem Bindemittel 24c eingebetteten Kernelementen 26c gebildet ist. Das Bindemittel 24c ist ein Epoxidharz. Die Kernelemente 26c sind Bruchstücke eines gesinterten Ferritwerkstoffes. Die Kerneinheit 14c weist zudem Bereiche 28c mit einer differierenden Kernmaterialzusammensetzung auf. Die Bereiche 28c bilden Schichten der Kerneinheit 14c. Der der Spuleneinheit 12c zugewandte erste Bereich 28c bildet einen Bereich 62c mit einer hohen Dichte an Kernelementen 26c und weist eine mittlere Permeabilitätszahl µ = 200 auf. Ein der Spuleneinheit 12c abgewandter dritter Bereich 28c bildet einen Bereich 66c mit einer niedriger Dichte an Kernelementen 26c und einem hohen Anteil des Bindemittels 24c und weist eine mittlere Permeabilitätszahl µ = 20 auf. Ein zwischen den Bereichen 62c und 66c angeordneter zweiter Bereich 64c weist eine mittlere Dichte an Kernelementen 26c und eine mittlere Permeabilitätszahl µ = 50 auf. In der Kerneinheit 14c nimmt eine Feldstärke des elektromagnetischen Wechselfelds im Betrieb der Induktivladespulenvorrichtung mit einem zunehmendem Abstand von der der Spuleneinheit 12c zugewandten Seite der Kerneinheit 14c rasch ab, so dass mit zunehmendem Abstand von der der Spuleneinheit 12c zugewandten Seite der Kerneinheit 14c ein sinkender Anteil Kernelemente 26c ausreichend ist. Das Bindemittel 24c weist eine geringere Dichte, niedrigere Kosten und eine höhere Bruchfestigkeit als die Kernelemente 26c auf, so dass der geringere Anteil an Kernelementen 26c vorteilhaft ist.

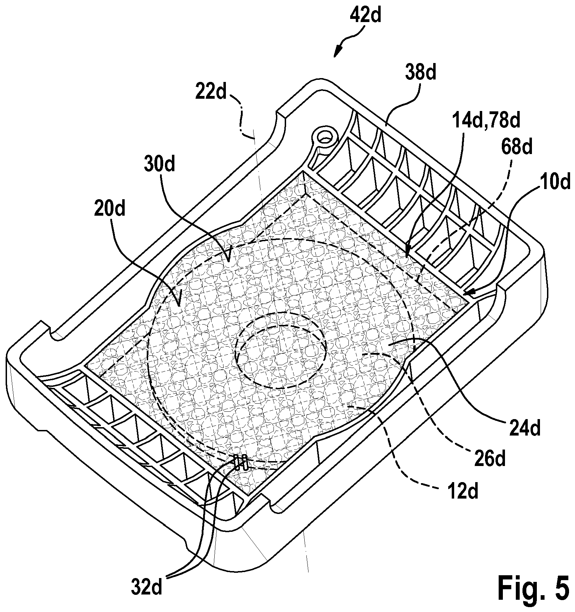

Figur 5 zeigt eine Spuleneinheit 12d und eine Kerneinheit 14d einer Induktivladespulenvorrichtung 10d in einem vierten Ausführungsbeispiel. Die Induktivladespulenvorrichtung 10d unterscheidet sich von der Induktivladespulenvorrichtung 10c des dritten Ausführungsbeispiels insbesondere dadurch, dass die Kerneinheit 14d in eine Gehäuseeinheit 38d eingegossen ist. Die Gehäuseeinheit 38d ist Teil eines hier nicht vollständig dargestellten Handwerkzeugakkupacks 42d. Die Gehäuseeinheit 38d weist eine Vertiefung 68d auf, in die zunächst die Spuleneinheit 12d eingelegt wird. In einem nächsten Schritt werden in der Vertiefung Kernelemente 26d verteilt. In einem nächsten Schritt wird die Spuleneinheit 12d gemeinsam mit den Kernelementen 26d mit einem Bindemittel 24d vergossen. Eine Kontaktierungseinheit 32d ist mit der Spuleneinheit 12d verbunden und ragt aus der in die Gehäuseeinheit 38d eingegossenen Kerneinheit 14d, so dass die Spuleneinheit 12d mit einer hier nicht näher dargestellten Ladeelektronik und einer Zelleneinheit des Handwerkzeugakkupacks 42d verbunden werden kann. Die Kerneinheit 14d weist eine Projektionsfläche 30d in Richtung einer Wicklungsachse 22d auf, die die Ladeelektronik und die Zelleneinheit vollständig überdeckt, so dass diese wirksam vor dem elektromagnetischen Wechselfeld aus dem Bereich der Spuleneinheit 12d abgeschirmt sind. Die Kerneinheit 14d kann vorteilhaft, wie im dritten Ausführungsbeispiel gezeigt, in mehreren Schichten mit einem abnehmenden Anteil an Kernelementen 26d aufgebaut sein, indem sie in mehreren Schritten vergossen wird und jeder Schicht ein anderer Anteil an Kernelementen 26d beigegeben wird.

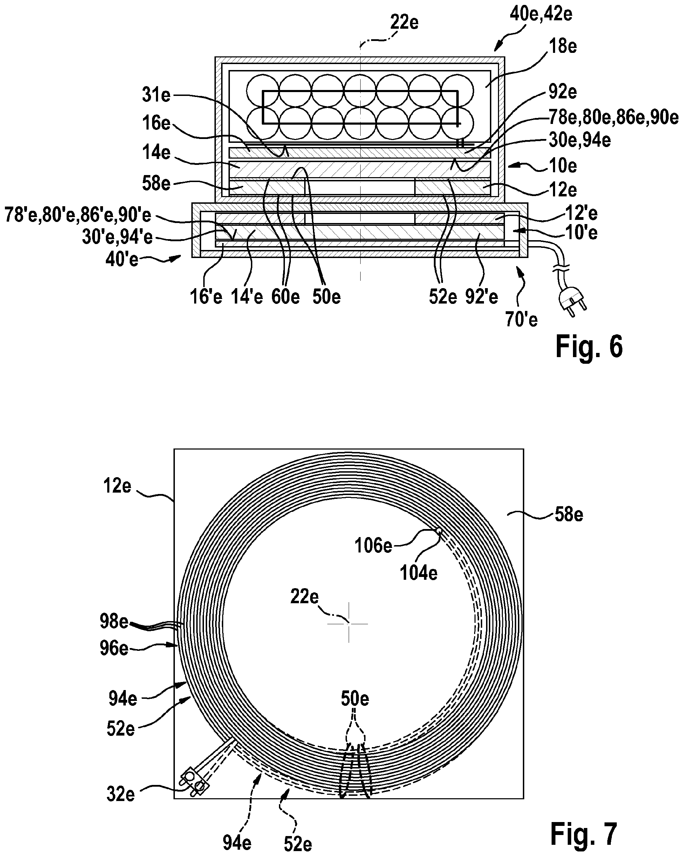

Figur 6 zeigt eine Handwerkzeugvorrichtung 40e mit einer Induktivladespulenvorrichtung 10e und eine weitere Handwerkzeugvorrichtung 40'e mit einer Induktivladespulenvorrichtung 10'e in einem fünften Ausführungsbeispiel. Die Induktivladespulenvorrichtung 10e unterscheidet sich von der Induktivladespulenvorrichtung 10a des ersten Ausführungsbeispiels insbesondere dadurch, dass eine Abschirmeinheit 78e von einer elektrisch leitenden Materialschicht 80e gebildet wird. Die elektrisch leitende Materialschicht 80e ist an einer einer Kerneinheit 14e zugewandten Seite einer Elektronikeinheit 16e angeordnet. Die Materialschicht 80e weist bei einer Projektion in Richtung einer Wicklungsachse 22e einer Spuleneinheit 12e eine Projektionsfläche 90e auf, die die Elektronikeinheit 16e und eine Zelleneinheit 18e überdeckt. Bei einer Projektion in Richtung der Wicklungsachse 22e entspricht die Projektionsfläche 90e im Wesentlichen einer Projektionsfläche 31e der Zelleneinheit 18e und ist identisch mit der Projektionsfläche 30e der Elektronikeinheit 16e. Ein magnetisches Wechselfeld in dem Bereich der Spuleneinheit 12e wird von der Abschirmeinheit 78e zu einem Großteil in Richtung der Spuleneinheit 12e zurückgeworfen, so dass eine Feldstärke im Bereich der Zelleneinheit 18e und ausgehend von der Abschirmeinheit 78e in Richtung der der Zelleneinheit 18e zugewandten Seite der Elektronikeinheit 16e reduziert ist. Die Elektronikeinheit 16e weist eine Leiterplatte 92e mit einer Leiterschicht 94e auf, die von einem Kupfermaterial gebildet wird. Die Leiterschicht 94e bildet die Materialschicht 80e und deckt die gesamte der Kerneinheit 14e zugewandte Seite der Elektronikeinheit 16e ab, so dass die Elektronikeinheit 16e und die Abschirmeinheit 78e die identischen Projektionsflächen 30e, 90e aufweisen.

Eine weitere Leiterplatte 58e mit zwei Leiterschichten 60e bildet die Spuleneinheit 12e (Figur 7). Die Spuleneinheit 12e weist zwei Leiterschleifen 50e mit spiralförmigen Wicklungen 52e mit identischem Wicklungssinn um die Wicklungsachse 22e auf. Die Wicklungen 52e der Leiterschleifen 50e weisen je einen Leiter 96e mit drei leitungstechnisch parallel angeordneten Adern 98e auf, die von den Leiterschichten 60e der Leiterplatte 58e gebildet werden. Die Adern 98e enden nach 4½ Wicklungen 52e um die Wicklungsachse 22e. Durch eine Durchführung 104e der Leiterplatte 58e ist ein mit den Adern 98e verbundener Verbindungsleiter 106e geführt, der die Leiterschleifen 50e verbindet, so dass die Spuleneinheit 12e in Summe eine ungerade Wicklungszahl von 9 aufweist. Durch die drei leitungstechnisch parallel angeordneten Adern 98e weisen die Leiterschleifen 50e, wenn die Adern 98e von einem hochfrequenten Strom durchflossen werden, nur geringe Wirbelstromverluste auf.

Wird die Induktivladespulenvorrichtung 10e dem Einfluss eines elektromagnetischen Wechselfelds ausgesetzt, wird in der Leiterschleife 50e der Spuleneinheit 12e ein Strom induziert, der zum Laden der Zelleneinheit 18e genutzt werden kann. Zur Erzeugung des elektromagnetischen Wechselfelds ist die zweite, analog aufgebaute Induktivladespulenvorrichtung 10'e einer Handwerkzeugakkuladevorrichtung 70'e vorgesehen. Eine Spuleneinheit 12'e wird durch eine Elektronikeinheit 16'e mit einem Wechselstrom beaufschlagt, so dass die Induktivladespulenvorrichtung 10'e das elektromagnetische Wechselfeld erzeugt, das von einer Kerneinheit 14'e gebündelt wird. Wird ein Handwerkzeugakkupack 42e auf die Handwerkzeugakkuladevorrichtung 70'e aufgesetzt, so gerät die Induktivladespulenvorrichtung 10e in den Einfluss des magnetischen Wechselfelds der Induktivladespulenvorrichtung 10'e, so dass eine Energieübertragung stattfindet. An einer der Kerneinheit 14'e zugewandten Seite der Elektronikeinheit 16'e ist eine von einer elektrisch leitenden Materialschicht 80'e gebildete Abschirmeinheit 78'e angeordnet. Die Materialschicht 80'e weist bei einer Projektion in Richtung der Wicklungsachse 22e der Spuleneinheit 12'e eine Projektionsfläche 90'e auf, die die Elektronikeinheit 16'e überdeckt. Bei einer Projektion in Richtung der Wicklungsachse 22e entspricht die Projektionsfläche 90'e einer Projektionsfläche 30'e der Elektronikeinheit 16'e. Ein magnetisches Wechselfeld in dem Bereich der Spuleneinheit 12'e wird von der Abschirmeinheit 78'e zu einem Großteil in Richtung der Spuleneinheit 12'e zurückgeworfen, so dass eine Feldstärke ausgehend von der Abschirmeinheit 78'e in Richtung einer der Spuleneinheit 12'e abgewandten Seite der Elektronikeinheit 16'e reduziert ist. Die Elektronikeinheit 16'e weist eine Leiterplatte 92'e mit einer Leiterschicht 94'a auf, die von einem Kupfermaterial gebildet wird. Die Leiterschicht 94'e bildet die Materialschicht 80'e und deckt die gesamte der Kerneinheit 14'e zugewandte Seite der Elektronikeinheit 16'e ab, so dass die Elektronikeinheit 16'e und die Abschirmeinheit 78'e die identische Projektionsfläche 90'e aufweisen.

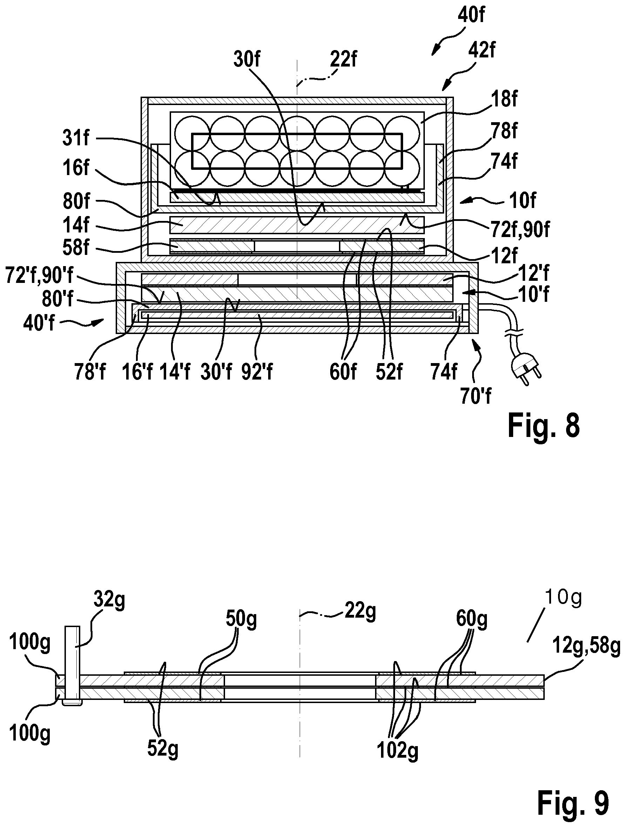

Figur 8 zeigt eine Spuleneinheit 12f einer Induktivladespulenvorrichtung 10f in einem sechsten Ausführungsbeispiel. Die Induktivladespulenvorrichtung 10f ist Teil einer als Handwerkzeugakkupack 42f ausgebildeten Handwerkzeugvorrichtung 40f. Die Induktivladespulenvorrichtung 10f unterscheidet sich von der Induktivladespulenvorrichtung 10e des fünften Ausführungsbeispiels insbesondere dadurch, dass eine Abschirmeinheit 78f als wannenförmige Materialschicht 80f ausgebildet ist und eine abzuschirmende Elektronikeinheit 16f und eine Zelleneinheit 18f teilweise umgibt. Die Abschirmeinheit 78f ist als Aluminiumwanne mit einer ebenen Grundfläche 72f ausgebildet, die bei einer Projektion in Richtung einer Wicklungsachse 22f der Spuleneinheit 12f eine Kerneinheit 14f vollständig überdeckt. Eine Projektionsfläche 90f der Abschirmeinheit 78f bei einer Projektion in Richtung der Wicklungsachse 22f ist größer als Projektionsflächen 30f, 31f der Elektronikeinheit 16f und der Zelleneinheit 18f bei einer Projektion in Richtung der Wicklungsachse 22f. Ein sich an die Grundfläche 72f anschließender, in Richtung der Elektronikeinheit 16f erstreckender Wandbereich 74f umschließt die Elektronikeinheit 16f und Teile der Zelleneinheit 18f um die Wicklungsachse 22f. Durch eine hier nicht näher dargestellte, bezogen auf die Wicklungsachse 22f außerhalb von Wicklungen 52f angeordnete Ausnehmung der Abschirmeinheit 78f ist eine hier ebenfalls nicht dargestellte, als Steckverbinder ausgeführte Kontaktierungseinheit geführt, die die Elektronikeinheit 16f mit der Spuleneinheit 12f elektrisch kontaktiert. Die wannenförmige Abschirmeinheit 78f kann die Elektronikeinheit 16f und die Zelleneinheit 18f besonders gut vor Einflüssen eines elektromagnetischen Felds aus dem Bereich der Spuleneinheit 12f abschirmen.

Ferner zeigt Figur 8 eine Spuleneinheit 12'f einer Induktivladespulenvorrichtung 10'f des sechsten Ausführungsbeispiels. Die Induktivladespulenvorrichtung 10'f ist Teil einer als Handwerkzeugakkuladevorrichtung 70'f ausgebildeten Handwerkzeugvorrichtung 40'f. Die Induktivladespulenvorrichtung 10'f unterscheidet sich von der Induktivladespulenvorrichtung 10'e des fünften Ausführungsbeispiels insbesondere dadurch, dass eine Abschirmeinheit 78'f als wannenförmige Materialschicht 80'f ausgebildet ist und eine abzuschirmende Elektronikeinheit 16'f mit einer Leiterplatte 92'f teilweise umgibt. Die Abschirmeinheit 78'f ist als Aluminiumwanne mit einer ebenen Grundfläche 72'f ausgebildet, die bei einer Projektion in Richtung einer Wicklungsachse 22f der Spuleneinheit 12'f eine Kerneinheit 14'f vollständig überdeckt. Eine Projektionsfläche 90'f der Abschirmeinheit 78'f bei einer Projektion in Richtung der Wicklungsachse 22f ist größer als eine Projektionsfläche 30'f der Elektronikeinheit 16'f bei einer Projektion in Richtung der Wicklungsachse 22f. Ein sich an die Grundfläche 72'f anschließender, in Richtung der Elektronikeinheit 16'f erstreckender Wandbereich 74'f umschließt die Elektronikeinheit 16'f um die Wicklungsachse 22f. Durch eine hier nicht näher dargestellte Ausnehmung der Abschirmeinheit 78'f ist eine hier ebenfalls nicht dargestellte, als Steckverbinder ausgeführte Kontaktierungseinheit geführt, die die Elektronikeinheit 16'f mit der Spuleneinheit 12'f elektrisch kontaktiert. Die wannenförmige Abschirmeinheit 78'f kann die Elektronikeinheit 16'f besonders gut vor Einflüssen eines elektromagnetischen Felds aus dem Bereich der Spuleneinheit 12'f abschirmen.

Figur 9 zeigt eine Spuleneinheit 12g einer Induktivladespulenvorrichtung 10g in einem siebten Ausführungsbeispiel. Die Induktivladespulenvorrichtung 10g unterscheidet sich von der Induktivladespulenvorrichtung 10g des fünften Ausführungsbeispiels insbesondere dadurch, dass die Spuleneinheit 12g von einer Leiterplatte 58g gebildet wird, die einen mehrlagigen Aufbau mit zwei Trägerschichten 100g aufweist. Die Spuleneinheit 12g weist drei an Seiten 102g der Trägerschichten 100g der Leiterplatte 58g angeordnete Leiterschichten 60g mit Leiterschleifen 50g auf. Zwei hier nicht näher dargestellte Durchführungen mit Verbindungsleitern verbinden die Leiterschleifen 50g. Ein Stecker einer Kontaktierungseinheit 32g ist zu einer Kontaktierung der Spuleneinheit 12g wie im vorangegangenen Ausführungsbeispiel vorgesehen. Die Spuleneinheit 12g besitzt im Vergleich zu den vorhergehenden Ausführungsbeispielen eine größere Anzahl Leiterschleifen 50g und kann somit in Summe eine größere Anzahl Wicklungen 52g aufweisen.

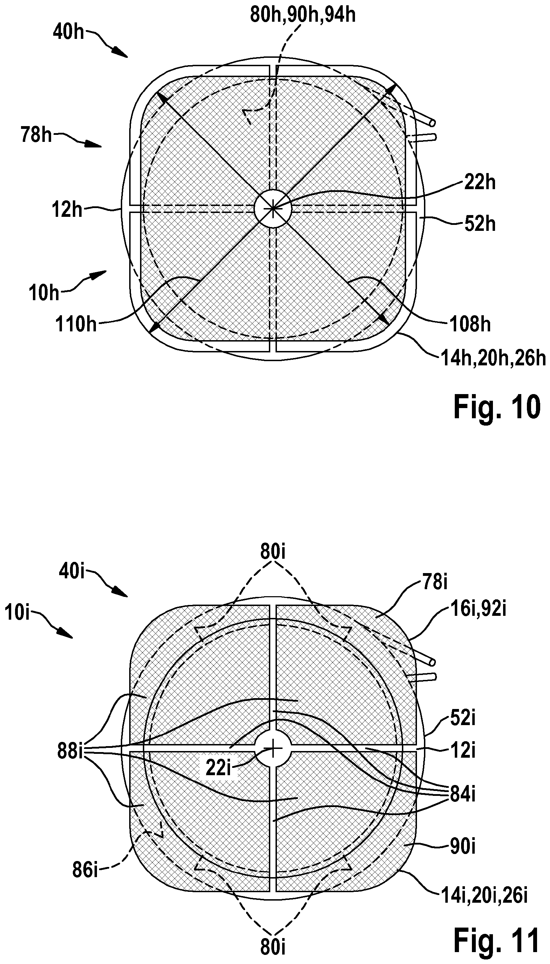

Figur 10 zeigt eine Abschirmeinheit 78h einer Handwerkzeugvorrichtung 40h mit einer eine Spuleneinheit 12h aufweisenden Induktivladespulenvorrichtung 10h in einem achten Ausführungsbeispiel. Die Induktivladespulenvorrichtung 10h unterscheidet sich von der Induktivladespulenvorrichtung 10e des fünften Ausführungsbeispiels insbesondere dadurch, dass eine elektrisch leitende Materialschicht 80h eine mittels einer Kreuzschraffur dargestellte Projektionsfläche 90h aufweist, die bei einer Projektion in Richtung einer Wicklungsachse 22h der Spuleneinheit 12h innerhalb einer Projektionsfläche 20h einer Kerneinheit 14h der Induktivladespulenvorrichtung 10h liegt. Die Spuleneinheit 12h weist Wicklungen 52h und einen hier nicht näher dargestellten Wicklungsträger auf. Die Wicklungen 52h sind als auf den Wicklungsträger um die Wicklungsachse 22h aufgewickelte Wicklungen einer Litze ausgebildet. Die einzelnen Wicklungen sind gegeneinander isoliert. Eine maximale Außenerstreckung 108h der Materialschicht 80h um die Wicklungsachse 22h ist 3mm kleiner als eine maximale Außenerstreckung 110h der Kerneinheit 14h. Die Materialschicht 80h wird von einer Leiterschicht 94h einer Leiterplatte einer nicht näher dargestellten Elektronikeinheit gebildet. Die Materialschicht 80h ist auf einer den Wicklungen 52h zugewandten, und einer Bestückungsseite abgewandten Rückseite der Leiterplatte angeordnet. Auf der Bestückungsseite der Leiterplatte angeordnete, hier nicht näher dargestellte elektronische Bauteile sind mit ihren identisches elektrisches Potential aufweisenden Anschlussleitern mit der Materialschicht 80h verbunden. Die Anschlussleiter der Bauteile sind zum Teil durch Durchführungen der Leiterplatte geführt und mit der Materialschicht 80h verlötet. In den Bauteilen beim Betrieb der Induktivladespulenvorrichtung 10h entstehende Wärme wird durch die Anschlussleiter zur Materialschicht 80h geleitet, so dass die Materialschicht 80h eine Wärmeabfuhr der Bauteile verbessert.

Die Kerneinheit 14h weist mehrere Kernelemente 26h auf. In diesem Fall weist die Kerneinheit 14h vier Kernelemente 26h auf. Die Kernelemente 26h sind pizzastückförmig ausgebildet und angeordnet. Die Projektionsfläche 90h der leitenden Materialschicht 80h und die Projektionsfläche 20h einer Kerneinheit 14h weisen zumindest im Wesentlichen eine gleiche Grundform auf. Die Kernelemente 26h bestehen vollständig aus einem insbesondere gesinterten Ferritwerkstoff, könnten alternativ jedoch auch aus Bruchstücken eines gesinterten Ferritwerkstoffs bestehen, die durch ein Bindemittel zusammengehalten werden.

Die Kernelemente 26h werden von dem Wicklungsträger relativ zueinander angeordnet. Der Wicklungsträger ist als ein Kunststoffbauteil ausgebildet. Die Kernelemente 26h sind in Aussparungen des Wicklungsträgers angeordnet, die in Richtung der Leiterschicht 94h offen ausgebildet sind. Der Wicklungsträger weist Trennelemente auf, die die Kernelemente 26h voneinander beabstanden. Der Wicklungsträger und die Leiterplatte befestigen die Kernelemente 26h nur formschlüssig. Alternativ könnten der Wicklungsträger und die Leiterplatte die Kernelemente 26h insbesondere zusätzlich kraftschlüssig und/oder stoffschlüssig befestigen.

Die Kernelemente 26h sind auf einer der Materialschicht 80h zugewandten Seite mit einem elektrisch isolierenden Lack beschichtet. Die Wicklungen 52h der Spuleneinheit 12h umschließen die Kerneinheit 14h auf einer Ebene. Auf dieser Ebene weist die Kerneinheit 14h eine kreisförmige Grundform auf.

Ein durch den Betrieb der Induktivladespulenvorrichtung 10h in der Materialschicht 80h induziertes elektrisches Potential ist ausreichend klein, dass die Funktion der elektronischen Bauteile nicht beeinträchtigt wird. Dies wird insbesondere dadurch erreicht, dass die maximale Außenerstreckung 108h der Materialschicht 80h kleiner als die maximale Außenerstreckung 110h der Kerneinheit 14h ist. Im Bereich nahe der maximalen Außenerstreckung 110h der Kerneinheit 14h ist eine Feldstärke des elektromagnetischen Wechselfelds im Betrieb der Induktivladespulenvorrichtung 10h besonders hoch. Die Materialschicht 80h ist außerhalb dieses Bereichs mit besonders hoher Feldstärke angeordnet. Es kann eine hohe Güte bei einem induktiven Ladevorgang erreicht werden, wodurch präzise eine Fremdobjekterkennung, zur Erkennung metallischer Fremdobjekte im Magnetfeld der Spuleneinheit 12h, möglich ist.

Figur 11 zeigt eine Abschirmeinheit 78i einer Handwerkzeugvorrichtung 40i mit einer Induktivladespulenvorrichtung 10i mit einer Spuleneinheit 12i und einer Kerneinheit 14i in einem neunten Ausführungsbeispiel. Die Induktivladespulenvorrichtung 10i unterscheidet sich von der Induktivladespulenvorrichtung 10e des fünften Ausführungsbeispiels insbesondere dadurch, dass vier elektrisch leitende Materialschichten 80i in vier Quadranten 88i an einer einer Bestückungsseite abgewandten, Wicklungen 52i der Spuleneinheit 12i zugewandten Rückseite 86i einer Leiterplatte 92i einer Elektronikeinheit 16i angeordnet sind. Die Kerneinheit 14i wird von vier pizzastückförmig ausgebildeten und angeordneten Kernelementen 26i gebildet. Die Materialschichten 80i sind durch Isolatoren 84i bildende Abstände getrennt. Die Materialschichten 80i weisen eine gemeinsame Projektionsfläche 90i auf, die bei einer Projektion in einer Wicklungsachse 22i die Kerneinheit 14i und die Spuleneinheit 12i weitgehend überdeckt. In einer Variante dieses Ausführungsbeispiels ist es auch möglich, dass die Projektionsfläche 90i der Materialschichten 80i wie im vorangegangenen Ausführungsbeispiel innerhalb einer Projektionsfläche 20i der Kerneinheit 14i liegt. Ein durch den Betrieb der Induktivladespulenvorrichtung 10i in den Materialschichten 80i induziertes elektrisches Potential ist bei dieser Variante reduziert. Die Materialschichten 80i werden von einer Leiterschicht 94i der Leiterplatte 92i gebildet. Auf der Bestückungsseite der Leiterplatte 92i angeordnete, hier nicht näher dargestellte elektronische Bauteile sind mit ihren identische elektrische Potentiale aufweisenden Anschlussleitern mit den Materialschichten 80i verbunden. Die Anschlussleiter der Bauteile sind durch Durchführungen der Leiterplatte 92i geführt und mit den Materialschichten 80i verlötet, wobei jeweils gleiche elektrisches Potential aufweisende Anschlussleiter mit einer der vier Materialschichten 80i verlötet sind. Ein Potentialausgleich mit Anschlussleitern, die mit jeweils einer der anderen Materialschichten 80i verlötet sind, kann vermieden werden. In den Bauteilen beim Betrieb der Induktivladespulenvorrichtung 10i entstehende Wärme wird durch die Anschlussleiter zur jeweiligen Materialschicht 80i geleitet, so dass die Materialschichten 80i eine Wärmeabfuhr der Bauteile verbessern.

## Patentansprüche

1. Handwerkzeugakkupack mit einer Gehäuseeinheit (38a, 38d) und mit einer Induktivladespulenvorrichtung (10a-i), insbesondere Handwerkzeuginduktivladespulenvorrichtung, welche wenigstens eine Spuleneinheit (12a-i), wenigstens eine Abschirmeinheit (78a-f; 78h-i), und wenigstens eine Kerneinheit (14a-f; 14h-i) umfasst, und mit wenigstens einer abzuschirmenden Elektronikeinheit (16a-b;16e-f;16i) und Zelleneinheit (18a-b, 18e-f), wobei die Induktivladespulenvorrichtung (10a-i) zwischen der Zelleneinheit (18a-b, 18e-f) und einer Gehäusewand (44a) der Gehäuseeinheit (38a, 38d) und die Elektronikeinheit zwischen der Zelleneinheit (18a-b, 18e-f) und der Induktivladespulenvorrichtung (10a-i) angeordnet ist, **dadurch gekennzeichnet, dass** eine Projektionsfläche (20a-d;20h-i) der Kerneinheit bei einer Projektion in Richtung einer Wicklungsachse (22a-i) der Spuleneinheit (12a-i) zumindest im Wesentlichen die abzuschirmende Elektronikeinheit und Zelleneinheit (18a-b; 18e-f) überdeckt.

2. Handwerkzeugakkupack nach Anspruch 1, **dadurch gekennzeichnet, dass** die Abschirmeinheit (78a-d) zumindest teilweise von der Kerneinheit (14a-d) gebildet wird.

3. Handwerkzeugakkupack nach Anspruch 1 oder 2, **dadurch gekennzeichnet, dass** die Projektionsfläche (20a-d) der Kerneinheit (14a-d) zumindest im Wesentlichen ausnehmungsfrei ist.

4. Handwerkzeugakkupack nach einem der vorhergehenden Ansprüche, **dadurch gekennzeichnet, dass** die Abschirmeinheit (78e-f; 78g-h) zumindest teilweise von zumindest einer elektrisch leitenden Materialschicht (80e-f;80h-i) gebildet wird.

5. Handwerkzeugakkupack nach Anspruch 4, **dadurch gekennzeichnet, dass** die zumindest eine elektrisch leitende Materialschicht (80e-f, 80i) eine Projektionsfläche (90e-f; 90i) aufweist, die bei einer Projektion in Richtung der Wicklungsachse (22e-f; 22i) der Spuleneinheit (12e-f) zumindest im Wesentlichen die abzuschirmende Elektronikeinheit (16e-f; 16i) und Zelleneinheit (18e-f) überdeckt.

6. Handwerkzeugakkupack nach Anspruch 4, **dadurch gekennzeichnet, dass** die zumindest eine elektrisch leitende Materialschicht (80h) eine Projektionsfläche (90h) aufweist, die bei einer Projektion in Richtung der Wicklungsachse (22h) der Spuleneinheit (12h) zumindest im Wesentlichen innerhalb der Projektionsfläche (20a-i) der Kerneinheit (14a-i) liegt.

7. Handwerkzeugakkupack nach Anspruch 4, **dadurch gekennzeichnet, dass** die Abschirmeinheit (78i) in einer Projektionsfläche (90i) in Richtung der Wicklungsachse (22i) der Spuleneinheit eine Mehrzahl elektrisch leitender, durch Isolatoren (84i) voneinander getrennter Materialschichten (80i) aufweist.

8. Handwerkzeugakkupack nach Anspruch 4, **dadurch gekennzeichnet, dass** zumindest eine elektrisch leitende Materialschicht (80e-f; 80h-i) an einer Rückseite (86e-f, 86i) der Elektronikeinheit (16e-f; 16i) angeordnet ist.

9. Handwerkzeugakkupack nach einem der vorhergehenden Ansprüche, **dadurch gekennzeichnet, dass** die Projektionsfläche der Kerneinheit und/oder wenn von Anspruch 4 abhängig zumindest eine Projektionsfläche (90e-f; 90i) der elektrisch leitenden Materialschicht (80e-f; 80i) bei der Projektion in Richtung der Wicklungsachse (22e-f; 22i) zumindest im Wesentlichen einer Projektionsfläche der abzuschirmenden Elektronikeinheit und Zelleneinheit (18a-b; 18e-f) bei der Projektion in Richtung der Wicklungsachse (22a-i) entspricht.

10. Handwerkzeugakkupack nach einem der vorhergehenden Ansprüche, **dadurch gekennzeichnet, dass** die Kerneinheit (14b) und/oder wenn von Anspruch 4 abhängig zumindest die elektrisch leitende Materialschicht (80f) zumindest teilweise topfförmig ausgebildet ist.

11. Handwerkzeugakkupack zumindest nach Anspruch 3 oder 4, **dadurch gekennzeichnet, dass** die Kerneinheit (14b) und/oder wenn von Anspruch 4 abhängig zumindest die elektrisch leitende Materialschicht (80f) die abzuschirmende Elektronikeinheit (16b; 16f) und/oder Zelleneinheit (18b; 18f) zumindest teilweise umgibt.

12. Handwerkzeugakkupack nach einem der vorhergehenden Ansprüche, **gekennzeichnet durch** eine Kontaktierungseinheit (32a), die durch eine Ausnehmung (34a; 36a) der Elektronikeinheit (16a) und/oder Zelleneinheit (18a) geführt ist.

13. Handwerkzeugakkupack zumindest nach Anspruch 4, **dadurch gekennzeichnet, dass** die Materialschicht an einer der Kerneinheit zugewandten Seite der Elektronikeinheit angeordnet ist.

14. Handwerkzeugakkupack zumindest nach Anspruch 4, **dadurch gekennzeichnet, dass** die Materialschicht von einer der Spuleneinheit zugewandten, einer Bestückungsseite abgewandten Leiterschicht (94e, 94h, 94i) einer Leiterplatte (92e, 92i) der Elektronikeinheit gebildet wird.

15. Handwerkzeugakkupack zumindest nach Anspruch 4, **dadurch gekennzeichnet, dass** die Abschirmeinheit die Kerneinheit und die elektrisch leitende Materialschicht umfasst.

## Claims

1. Handheld tool rechargeable battery pack comprising a housing unit (38a, 38d) and comprising an inductive charging coil apparatus (10a-i), in particular handheld tool inductive charging coil apparatus, which comprises at least one coil unit (12a-i), at least one shielding unit (78a-f; 78h-i) and at least one core unit (14a-f; 14h-i), and comprising at least one electronics unit (16a-b; 16e-f; 16i) and cell unit (18a-b, 18e-f) which are to be shielded, wherein the inductive charging coil apparatus (10a-i) is arranged between the cell unit (18a-b, 18e-f) and a housing wall (44a) of the housing unit (38a, 38d), and the electronics unit is arranged between the cell unit (18a-b, 18e-f) and the inductive charging coil apparatus (10a-i), **characterized in that** a projection surface (20a-d; 20h-i) of the core unit, in a projection in the direction of a winding axis (22a-i) of the coil unit (12a-i), at least substantially covers the electronics unit and cell unit (18a-b; 18e-f) which are to be shielded.

2. Handheld tool rechargeable battery pack according to Claim 1, **characterized in that** the shielding unit (78a-d) is at least partially formed by the core unit (14a-d).

3. Handheld tool rechargeable battery pack according to Claim 1 or 2, **characterized in that** the projection surface (20a-d) of the core unit (14a-d) is at least substantially free of recesses.

4. Handheld tool rechargeable battery pack according to one of the preceding claims, **characterized in that** the shielding unit (78e-f; 78g-h) is at least partially formed by at least one electrically conductive material layer (80e-f; 80h-i).

5. Handheld tool rechargeable battery pack according to Claim 4, **characterized in that** the at least one electrically conductive material layer (80e-f, 80i) has a projection surface (90e-f; 90i) which, in a projection in the direction of the winding axis (22e-f; 22i) of the coil unit (12e-f), at least substantially covers the electronics unit (16e-f; 16i) and cell unit (18e-f) which are to be shielded.

6. Handheld tool rechargeable battery pack according to Claim 4, **characterized in that** the at least one electrically conductive material layer (80h) has a projection surface (90h) which, in a projection in the direction of the winding axis (22h) of the coil unit (12h), lies at least substantially within the projection surface (20a-i) of the core unit (14a-i).

7. Handheld tool rechargeable battery pack according to Claim 4, **characterized in that** the shielding unit (78i), in a projection surface (90i) in the direction of the winding axis (22i) of the coil unit, has a plurality of electrically conductive material layers (80i) which are separated from one another by insulators (84i).

8. Handheld tool rechargeable battery pack according to Claim 4, **characterized in that** at least one electrically conductive material layer (80e-f; 80h-i) is arranged on a rear side (86e-f, 86i) of the electronics unit (16e-f; 16i).

9. Handheld tool rechargeable battery pack according to one of the preceding claims, **characterized in that** the projection surface of the core unit and/or, if dependent on Claim 4, at least one projection surface (90e-f; 90i) of the electrically conductive material layer (80e-f; 80i), in the projection in the direction of the winding axis (22e-f; 22i), at least substantially correspond/corresponds to a projection surface of the electronics unit and cell unit (18a-b; 18e-f), which are to be shielded, in the projection in the direction of the winding axis (22a-i).

10. Handheld tool rechargeable battery pack according to one of the preceding claims, **characterized in that** the core unit (14b) and/or, if dependent on Claim 4, at least the electrically conductive material layer (80f) are/is at least partially designed in the form of a pot.

11. Handheld tool rechargeable battery pack at least according to Claim 3 or 4, **characterized in that** the core unit (14b) and/or, if dependent on Claim 4, at least the electrically conductive material layer (80f) at least partially surround/surrounds the electronics unit (16b; 16f) and/or cell unit (18b; 18f) which are/is to be shielded.

12. Handheld tool rechargeable battery pack according to one of the preceding claims, **characterized by** a contact-making unit (32a) which is guided through a recess (34a; 36a) of the electronics unit (16a) and/or cell unit (18a).

13. Handheld tool rechargeable battery pack at least according to Claim 4, **characterized in that** the material layer is arranged on a side of the electronics unit that faces the core unit.

14. Handheld tool rechargeable battery pack at least according to Claim 4, **characterized in that** the material layer is formed by a conductor layer (94e, 94h, 94i) of a printed circuit board (92e, 92i) of the electronics unit, which conductor layer faces the core unit and is averted from a component side.

15. Handheld tool rechargeable battery pack at least according to Claim 4, **characterized in that** the shielding unit comprises the core unit and the electrically conductive material layer.

## Revendications

1. Bloc-batterie pour outil à main comportant une unité formant boîtier (38a, 38d) et un dispositif à bobine de charge inductive (10a-i), en particulier un dispositif à bobine de charge inductive pour outil à main, qui comprend au moins une unité formant bobine (12a-i), au moins une unité de blindage (78a-f ; 78h-i), et au moins une unité formant noyau (14a-f ; 14h-i), et comportant au moins une unité électronique (16a-b ; 16e-f ; 16i) et une unité formant élément (18a-b, 18e-f) qui doivent être blindées, dans lequel le dispositif de bobine de charge inductive (10a-i) est connecté entre l'unité formant élément (18a-b, 18e-f) et une paroi de boîtier (44a) de l'unité formant boîtier (38a, 38d) et l'unité électronique est disposée entre l'unité formant élément (18a-b, 18e-f) et le dispositif de bobine de charge inductive (10a-i), **caractérisé en ce qu'**une surface de projection (20a-d ; 20h-i) de l'unité formant noyau, lors d'une projection dans la direction d'un axe (22a-i) de l'unité formant bobine (12a-i), recouvre au moins sensiblement l'unité électronique et l'unité formant élément (18a-b ; 18e-f) qui doivent être blindées.

2. Bloc-batterie pour outil à main selon la revendication 1, **caractérisé en ce que** l'unité de blindage (78a-d) est formée au moins partiellement par l'unité formant noyau (14a-d).

3. Bloc-batterie pour outil à main selon la revendication 1 ou 2, **caractérisé en ce que** la surface de projection (20a-d) de l'unité formant noyau (14a-d) est au moins pratiquement exempte d'évidement.

4. Bloc-batterie pour outil à main selon l'une des revendications précédentes, **caractérisé en ce que** l'unité de blindage (78e-f ; 78g-h) est formée au moins partiellement par au moins une couche de matériau électriquement conducteur (80e-f ; 80h-i).

5. Bloc-batterie pour outil à main selon la revendication 4, **caractérisé en ce que** ladite au moins une couche de matériau électriquement conducteur (80e-f, 80i) présente une surface de projection (90e-f ; 90i) qui, lors d'une projection dans la direction de l'axe d'enroulement (22e-f ; 22i) de l'unité formant bobine (12e-f), recouvre au moins sensiblement l'unité électronique (16e-f ; 16i) et l'unité formant élément (18e-f) qui doivent être blindées.

6. Bloc-batterie pour outil à main selon la revendication 4, **caractérisé en ce qu'**au moins une couche de matériau électriquement conducteur (80h) présente une surface de projection (90h) qui, lors d'une projection dans la direction de l'axe d'enroulement (22h) de l'unité formant bobine (12h), se situe au moins sensiblement à l'intérieur de la surface de projection (20a-i) de l'unité formant noyau (14a-i).

7. Bloc-batterie pour outil à main selon la revendication 4, **caractérisé en ce que** l'unité de blindage (78i) présente sur une surface de projection (90i), dans la direction de l'axe d'enroulement (22i) de l'unité formant bobine, une pluralité de couches de matériau électriquement conducteur (80i) séparées les unes des autres par des isolateurs (84i).

8. Bloc-batterie pour outil à main selon la revendication 4, **caractérisé en ce qu'**au moins une couche de matériau électriquement conducteur (80e-f ; 80h-i) est disposée sur un côté arrière (86e-f, 86i) de l'unité électronique (16e-f ; 16i).

9. Bloc-batterie pour outil à main selon l'une des revendications précédentes, **caractérisé en ce que** la surface de projection de l'unité formant noyau et/ou, lorsque cela dépend de la revendication 4, au moins une surface de projection (90e-f ; 90i) de la couche de matériau électriquement conducteur (80e-f ; 80i), lors de la projection dans la direction de l'axe d'enroulement (22e-f ; 22i), correspond sensiblement à une surface de projection de l'unité électronique et de l'unité formant élément (18a-b ; 18e-f) qui doivent être blindées, lors de la projection dans la direction de l'axe d'enroulement (22a-i).

10. Bloc-batterie pour outil à main selon l'une des revendications précédentes, **caractérisé en ce que** l'unité formant noyau (14b) et/ou, lorsque cela dépend de la revendication 4, au moins la couche de matériau électriquement conducteur (80f) est réalisée au moins partiellement en forme de pot.

11. Bloc-batterie pour outil à main selon au moins la revendication 3 ou 4, **caractérisé en ce que** l'unité formant noyau (14b) et/ou, lorsque cela dépend de la revendication 4, au moins la couche de matériau électriquement conducteur (80f), entoure au moins partiellement l'unité électronique (16b ; 16f) et/ou l'unité formant élément (18b ; 18f) qui doivent être blindées.

12. Bloc-batterie pour outil à main selon l'une des revendications précédentes, **caractérisé par** une unité de contact (32a) qui est guidée à travers un évidement (34a ; 36a) de l'unité électronique (16a) et/ou de l'unité formant élément (18a).

13. Bloc-batterie pour outil à main selon au moins la revendication 4, **caractérisé en ce que** la couche de matériau est disposée sur un côté de l'unité électronique qui est tourné vers l'unité formant noyau.

14. Bloc-batterie pour outil à main selon au moins la revendication 4, **caractérisé en ce que** la couche de matériau est formée par une couche conductrice (94e, 94h, 94i) d'une carte de circuit imprimé (92e, 92i) de l'unité électronique, laquelle couche conductrice est tournée vers l'unité formant bobine et en sens opposé à un côté de montage.

15. Bloc-batterie pour outil à main selon au moins la revendication 4, **caractérisé en ce que** l'unité de blindage comprend l'unité formant noyau et la couche de matériau électriquement conducteur.
